# EUROPEAN PATENT APPLICATION

(11) **EP 2 400 330 A1**
(43) Date of publication of application: **28.12.2011**
(21) Application number: 11170548.9
(22) Date of filing: 20.06.2011
(51) Int. Cl.: G02B 6/44, G02B 6/38

(54) **Apparatus for handling optical waveguides**

(30) Priority: 22.06.2010 DE 202010009387 U
(71) Applicant: CCS Technology, Inc., Wilmington, DE 19803 (US)
(72) Inventor: Matthies, Jürgen, Dipl.-Ing., 58300 Wetter (DE); Fabrykowski, Grzegorz, Dipl.-Ing., 95-010 Gmina Strykow (PL)
(74) Representative: Sturm, Christoph

(57) **Abstract**

Apparatus for handling optical waveguides and junction points between optical waveguides, having a housing (11) and having assemblies, which are accommodated in the housing (11), for connecting and/or laying optical waveguides, it being possible to accommodate plug-type connectors for optical waveguides on at least one side wall (14) of the housing, specifically in openings (15) in the respective side wall, in order to connect optical waveguides by means of the plug-type connectors and to insert optical waveguides into an interior space, which is defined by the housing, and to guide optical waveguides out of the said interior space by means of the plug-type connectors, whereby one side wall (14) of the housing (11), which side wall serves to accommodate plug-type connectors, is dimensioned in such a way that, given a side wall surface area of between 9 cm² and 17 cm², the said side wall accommodates up to 4 ports of SC plug-type connectors (16) or up to 8 ports of LC plug-type connectors (17), and/or whereby the interior space in the housing (11) is dimensioned in such a way that, given a volume of between 160 cm³ and 200 cm³, the said interior space accommodates up to 8 optical waveguides which are connected to plug-type connectors.

## Description

The present invention relates to an apparatus for handling optical waveguides and junction points between optical waveguides, according to the preamble of Claims 1 and 3.

When designing optical waveguide cable networks, apparatuses for handling optical waveguides and junction points between optical waveguides are required to ensure structured wiring. One requirement made of such apparatuses is maximum population of the said apparatuses together with a high packing density and simultaneous, low mechanical loading on the optical waveguides.

The product catalogue "Zubehör für LWL-Kabelnetze [Accessories for optical waveguide cable networks], pages 182-187, edition 1, Corning Cable Systems GmbH & Co KG, year 2001" has already disclosed an apparatus, which is in the form of a wall-mounted distribution device, for handling optical waveguides and junction points between optical waveguides, the said apparatus comprising a housing and assemblies, which are accommodated in the housing, for connecting and/or laying data conductors, it being possible for data conductors to be inserted into an interior space, which is defined by the housing, and to be guided out of the said interior space by means of at least one side wall of the housing, specifically by means of openings made in the side wall. To date, such apparatuses for handling optical waveguides and junction points between optical waveguides have had relatively large dimensions in order to ensure low mechanical loading of the optical waveguides together with maximum population.

Taking this as a starting point, the present invention is based on the problem of providing a novel apparatus for handling optical waveguides and junction points between optical waveguides.

According to a first aspect of the invention, this problem is solved by an apparatus having the features of Claim 1. According to the said claim, at least one side wall of the housing, which side wall serves to accommodate plug-type connectors, is dimensioned in such a way that, given a side wall surface area of between 9 cm² and 17 cm², the said side wall accommodates up to 4 ports of SC plug-type connectors or up to 8 ports of LC plug-type connectors.

According to a second aspect of the invention, this problem is solved by an apparatus having the features of Claim 3. According to the said claim, the interior space in the housing is dimensioned in such a way that, given a volume of between 160 cm³ and 200 cm³, the said interior space accommodates up to 8 optical waveguides which are connected to plug-type connectors, and possibly accommodates further optical waveguides which are not connected to plug-type connectors and/or spliced optical waveguides.

Both the first aspect of the present invention and also the second aspect of the invention, which aspects can be used either alone or preferably in combination with one another in an apparatus for handling optical waveguides and junction points between optical waveguides, propose apparatuses for handling optical waveguides and junction points between optical waveguides with relatively small dimensions, but in which low mechanical loading of the optical waveguides together with maximum population can nevertheless be ensured.

Therefore, according to the first aspect of the invention, it is proposed that that side wall of the housing which serves to accommodate plug-type connectors be dimensioned in such a way that, given a relatively small side wall surface area of between 9 cm² and 17 cm², the said side wall can accommodate up to four ports of SC plug-type connectors or up to eight ports of LC plug-type connectors.

A ratio between the ports which can be accommodated per unit side wall surface area is accordingly between approximately 0.23 and approximately 0.45 ports per cm² in the case of SC plug-type connectors. In the case of LC plug-type connectors, this ratio is between approximately 0.46 and approximately 0.90 ports per cm².

According to the second aspect of the present invention, the volume of the interior space in the housing of the apparatus according to the invention is dimensioned in such a way that, given a volume of between 160 cm³ and 200 cm³, up to eight optical waveguides which are connected to plug-type connectors and possibly further optical waveguides, specifically optical waveguides which are not connected to plug-type connectors and/or spliced optical waveguides, can be accommodated in the interior space. A ratio of optical waveguides which can be accommodated and are connected to plug-type connectors per unit volume is accordingly between approximately 0.04 and approximately 0.05 optical waveguides per cm³. A ratio of optical waveguides which can be accommodated in total per unit volume is more than 0.05 optical waveguides per cm³.

According to an advantageous development of the first aspect and/or of the second aspect of the invention, a first side wall of the housing serves to accommodate plug-type connectors, and a second side wall of the housing, which is situated opposite the said first side wall, serves to insert optical waveguides into the interior space by means of optical waveguide cables, with guide elements, which engage with a rear wall of the housing, for optical waveguides being positioned in the interior space between the first side wall and the second side wall, it being possible for optical waveguides of an optical waveguide cable which is guided across the second side wall to be guided and fed to the plug-type connectors of the opposite first side wall by means of the said guide elements in such a way that at least a first optical waveguide of an optical waveguide cable can be fed to a plug-type connector without a change in the bending direction and at least a second optical waveguide of the same optical waveguide cable can be fed to a plug-type connector with a change in the bending direction.

This configuration of the guide elements for the optical waveguides allows optical waveguides to be handled with minimal mechanical loading in the case of the above-defined design of the side wall and/or the above-defined design of the interior space of the housing of the apparatus according to the invention and in spite of the relatively small side wall surface area of the side wall which accommodates the plug-type connectors and/or in spite of the relatively small volume of the interior space, which accommodates the optical waveguides, of the housing.

Preferred developments of the invention can be gathered from the dependent claims and the following description. An exemplary embodiment is explained in greater detail with reference to the drawing, in which:
- Fig. 1:: shows a perspective view of an apparatus according to the invention, which is in the form of a wall-mounted distribution device, for handling optical waveguides and junction points between optical waveguides, together with plug-type connectors;
- Fig. 2:: shows the apparatus according to the invention from Fig. 1, without the cover upper part, together with SC plug-type connectors;
- Fig. 3:: shows the apparatus according to the invention from Fig. 1, without the cover upper part, together with LC plug-type connectors;
- Fig. 4:: shows the apparatus according to the invention from Fig. 1, without the cover upper part and without plug-type connectors, but together with four data conductors which are inserted into the apparatus by means of an optical waveguide cable;
- Figs 5: to 8 show the arrangement from Fig. 4 with only one of the four data conductors which are inserted into the apparatus by means of the optical waveguide cable; and
- Fig. 9:: shows a side view of that side wall of the apparatus which serves to accommodate the plug-type connectors.

The present invention relates to an apparatus for handling optical waveguides and for handling junction points between optical waveguides.

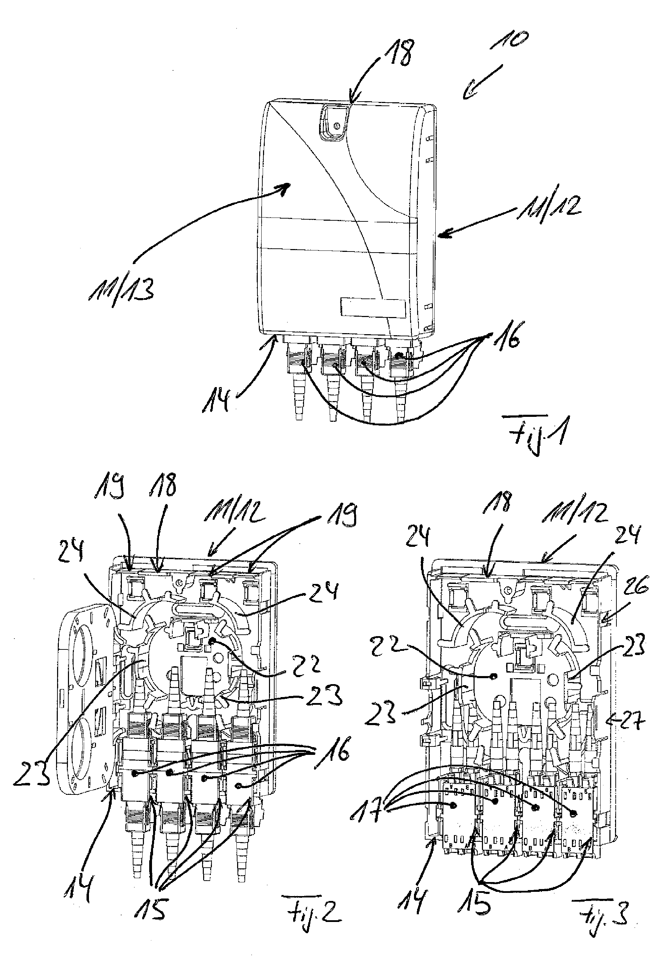

Fig. 1 shows a preferred exemplary embodiment of an apparatus 10 according to the invention, which is in the form of a wall-mounted distribution device, for handling optical waveguides and for handling junction points between optical waveguides, with the apparatus 10 shown in Fig. 1 having a housing 11 comprising a fitst housing part 12 and a second housing part 13. The first housing part 12 and the second housing part 13 of the housing 11 together define an interior space of the apparatus 10, with assemblies for connecting and/or laying data conductors being positioned in the interior space.

The first housing part 12 is also without limitation to its orientation called housing lower part 12 and the second housing part 13 is also without limitation to its orientation called housing upper part 13.

According to Figs 1 to 3, a side wall 14 of the housing 11 of the apparatus 10 according to the invention, specifically a side wall 14 of the housing lower part 12, is designed in such a way that optical waveguides can be inserted into the housing 11, or the interior space which is defined by the housing 11, by means of openings 15 which are associated with the said side wall 14 and by means of plug-type connectors 16 and 17 which can be accommodated in the openings 15. Fig. 2 shows SC plug-type connectors 16 which are accommodated in the openings 15 in the side wall 14, whereas, in Fig. 3, LC plug-type connectors 17 are accommodated in the openings 15 in the side wall 14 of the housing lower part 12 of the housing 11.

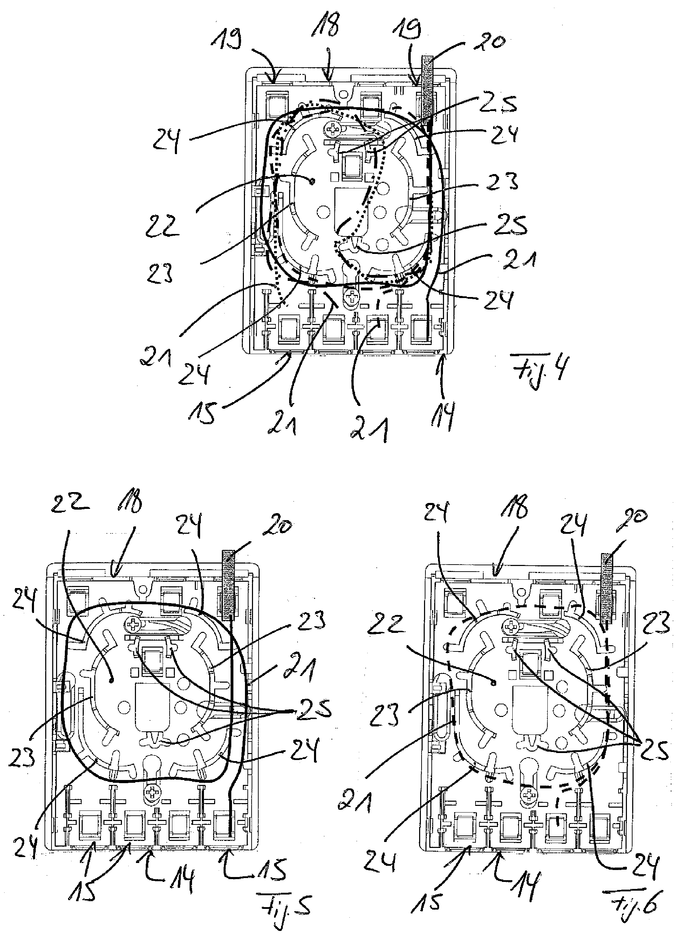

A side wall 18, which is situated opposite the side wall 14, of the housing 11 or housing lower part 12 likewise has openings 19 by means of which, in accordance with Figs 4 to 8, optical waveguide cables 20 and therefore optical waveguides 21 which are guided in the optical waveguide cables 20 can be inserted into the interior space in the housing 11 in order to feed the optical waveguides 21, which are inserted into the said housing with the aid of the optical waveguide cable 20 by means of the side wall 18 of the housing 11, to the plug-type connectors 16 and 17 which are accommodated on the opposite side wall 14 of the housing 11.

At least that side wall 14 of the housing 11, which serves to accommodate plug-type connectors, is dimensioned in such a way that, given a side wall surface area of between 9 cm² and 17 cm², the said side wall accommodates up to four (4) ports of SC plug-type connectors 16 or up to eight (8) ports of LC plug-type connectors 17. For example, Fig. 3 shows that four SC plug-type connector ports are accommodated in the openings 15 in the side wall 14, whereas eight LC plug-type connector ports are accommodated in the openings 15 in the side wall 14 in Fig. 3.

This accordingly results in a ratio of between approximately 0.23 and approximately 0.45 ports per cm² for SC plug-type connectors 16 and a ratio of approximately 0.46 to approximately 0.90 ports per cm² for LC plug-type connectors 17.

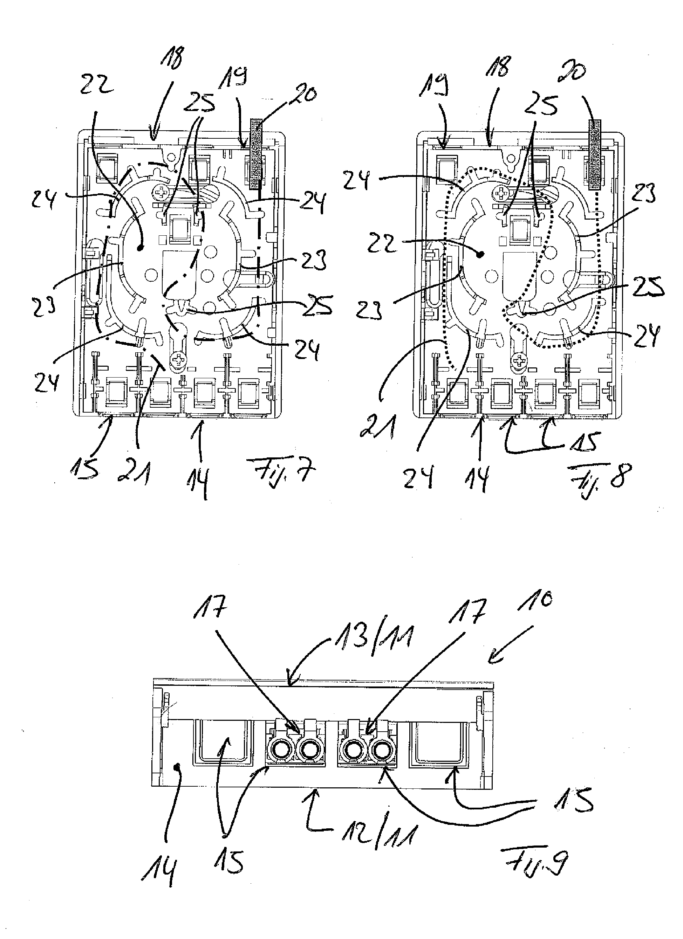

When the apparatus 10 according to the invention is not fully populated by plug-type connectors, plug-type connectors can also be accommodated only in some of the openings 15 in the side wall 14. For example, Fig. 9 shows a configuration in which LC plug-type connectors 17, which provide four LC ports, are accommodated only in the two central openings 15 in the side wall 14. However, such plug-type connectors can also be positioned in the two outer openings 15, and therefore up to eight LC ports can accordingly be accommodated in the region of the side wall 14, the said side wall having a cross-sectional area of between 9 cm² and 17 cm².

The interior space, which is defined by the housing 11, of the apparatus 10 according to the invention has, according to a further aspect of the present invention, a volume of between 160 cm³ and 200 cm³. The volume is preferably 180 cm³. Up to eight optical waveguides can be accommodated and handled in this volume, said optical waveguides being connected to plug-type connectors. In the exemplary embodiment of Fig. 2, in which SC plug-type connectors 16 are accommodated in the openings 15 in the side wall 14, the interior space accommodates up to four optical waveguides.

In the exemplary embodiment of Fig. 3, in which LC plug-type connectors 17 are accommodated in the openings 15 in the side wall 14, the interior space of the apparatus 10 accommodates up to eight optical waveguides.

As a result, up to eight optical waveguides can be accommodated in the relatively small interior space in the housing 11 of the apparatus 10 according to the invention.

Furthermore, optical waveguides which are not connected to plug-type connectors and/or spliced optical waveguides can additionally be accommodated in the housing.

This accordingly results in a ratio between optical waveguides which are accommodated and are connected to plug-type connectors to volume of the housing 11 of between 0.04 and 0.05 optical waveguides per cm³. A ratio of optical waveguides which can be accommodated in total per unit volume is more than 0.05 optical waveguides per cm³.

In order to ensure protective handling of the optical waveguides 21 firstly when there is such a large number of plug-type connector ports per unit surface area of the side wall 14 and secondly when there is such a large number of optical waveguides to be handled in the relatively small volume of the housing 11, the housing 11 of the apparatus 10 according to the invention has guide devices for the optical waveguides 21 in the interior space. Therefore, it can be seen best in Figs 4 to 8 that guide elements for optical waveguides, specifically bent, relatively large guide elements 23 and 24, are positioned in the interior space of the housing 11 between the side wall 15 and the side wall 18 of the housing 11 on a rear wall 22 of the housing lower part 12.

These guide elements 23 and 24 are each in the form of a segment of a circle, with the guide elements 23 being positioned on a relatively small radius and the guide elements 24 being positioned on a relatively large radius.

The optical waveguides 21, which are inserted into the housing 11 of the apparatus 10 according to the invention by means of the optical waveguide cable 20 at the side wall 18, can be fed, while maintaining permissible minimum bending radii and therefore under low mechanical loading, to the plug-type connectors 16 and 17 which are accommodated on the opposite side wall 14, specifically in such a way that at least one first optical waveguide 21 of the optical waveguide cable 20 can be fed to a plug-type connector without a change in bending direction (see Figs 5 and 6) and at least a second optical waveguide 21 can be fed to a plug-type connector with a change in bending direction (see Figs 7 and 8), by means of guide elements 23 and 24 which are attached to the rear wall 22 of the housing lower part 12 of the housing 11 of the apparatus 10 according to the invention. In order to ensure a clearer illustration, Figs 4 to 8 do not show the plug-type connectors 16 and 17 but only the openings 15 in the side wall 14 in which the plug-type connectors 16 and 17 can be positioned.

When, as shown in Figs 4 to 8, optical waveguides 21 are inserted into the housing 11 by means of the optical waveguide cable 20 at the side wall 18 at the right-hand end of the said side wall, the optical waveguides 21, which are fed to the two right-hand plug-type connectors in the region of the opposite side wall 14 according to Figs 5 and 6, can be guided on guide elements without a change in bending direction, specifically on the guide elements 24 which are positioned on the relatively large radius. Such optical waveguides 21 of the optical waveguide cable 20, which optical waveguides are inserted into the housing at the right-hand end of the side wall 18 and are fed to the left-hand plug-type connectors in the region of the side wall 14, are guided, according to Figs 7 and 8, with a change in bending direction in the interior space of the housing 11 and, to this end, are guided through a central section in relation to the ends of the side walls 14 and 18, with neither the guide elements 23 nor the guide elements 24 being positioned in this central section, with the result that the optical waveguides 21 which are fed to the plug-type connectors 16 and 17 with a change in bending direction, can be guided across this central region with a change in bending direction.

As can be gathered from Figs 4 to 8, only short, web-like guide elements 25 are present in this central region in order to guide optical waveguides 21 when there is a change in bending direction.

Optical waveguides 21 are guided in a similar way when said optical waveguides are inserted into the housing 11 by means of the left-hand opening 19 in the side wall 18, with such optical waveguides, which are fed to the left-hand plug-type connectors in the region of the side wall 14, again being guided without a change in bending direction, whereas those optical waveguides which are fed to the right-hand plug-type connectors are subject to a change in bending direction in the central section of the rear wall 22 of the housing lower part 12. Furthermore, such optical waveguides which are inserted into the housing 11 by means of an opening 26 (see Fig. 3) in a side wall 27 of the housing lower part 12, which side wall extends between the side walls 14 and 18, are guided in an analogous manner.

### List of reference symbols

- 10: Apparatus
- 11: Housing
- 12: Housing part
- 13: Housing part
- 14: Side wall
- 15: Opening
- 16: SC plug-type connector
- 17: LC plug-type connector
- 18: Side wall
- 19: Opening
- 20: Optical waveguide cable
- 21: Optical waveguide
- 22: Rear wall
- 23: Guide element
- 24: Guide element
- 25: Guide element
- 26: Opening
- 27: Side wall

## Claims

1. Apparatus for handling optical waveguides and junction points between optical waveguides, having a housing (11) and having assemblies, which are accommodated in the housing (11), for connecting and/or laying optical waveguides, it being possible to accommodate plug-type connectors for optical waveguides on at least one side wall (14) of the housing, specifically in openings (15) in the respective side wall, in order to connect optical waveguides by means of the plug-type connectors and to insert optical waveguides into an interior space, which is defined by the housing, and to guide optical waveguides out of the said interior space by means of the plug-type connectors, **characterized in that** at least one side wall (14) of the housing (11), which side wall serves to accommodate plug-type connectors, is dimensioned in such a way that, given a side wall surface area of between 9 cm² and 17 cm², the said side wall accommodates up to 4 ports of SC plug-type connectors (16) or up to 8 ports of LC plug-type connectors (17).

2. Apparatus according to Claim 1, **characterized by** features according to Claim 3.

3. Apparatus for handling optical waveguides and junction points between optical waveguides, having a housing (11) and having assemblies, which are accommodated in the housing (11), for connecting and/or laying optical waveguides, it being possible to accommodate plug-type connectors for optical waveguides on at least one side wall (14) of the housing, specifically in openings (15) in the respective side wall, in order to connect optical waveguides by means of the plug-type connectors and to insert optical waveguides into an interior space, which is defined by the housing, and to guide optical waveguides out of the said interior space by means of the plug-type connectors, **characterized in that** the interior space in the housing (11) is dimensioned in such a way that, given a volume of between 160 cm³ and 200 cm³, the said interior space accommodates up to 8 optical waveguides which are connected to plug-type connectors.

4. Apparatus according to Claim 3, **characterized by** features according to Claim 1.

5. Apparatus according to one of Claims 1 to 4, **characterized in that** a first side wall (14) of the housing (11) serves to accommodate plug-type connectors, and a second side wall (18), which is preferably situated opposite the said first side wall, serves to insert optical waveguides into the interior space by means of optical waveguide cables, with guide elements (23, 24, 25), which are attached to a rear wall (22) of the housing, for optical waveguides being positioned in the interior space between the first side wall (14) and the second side wall (18), it being possible for optical waveguides of an optical waveguide cable which is guided across the second side wall (18) to be guided and fed to the plug-type connectors of the opposite first side wall (14) by means of the said guide elements in such a way that at least a first optical waveguide of an optical waveguide cable can be fed to a plug-type connector without a change in the bending direction and at least a second optical waveguide of the same optical waveguide cable can be fed to a plug-type connector with a change in the bending direction.

6. Apparatus according to Claim 5, **characterized in that** first and second guide elements (23, 24) for optical waveguides are in the form of a segment of a circle, with no guide elements, which are in the form of an segment of a circle, being present in a central section in relation to ends of the side walls (14, 18), and therefore it being possible for the or each optical waveguide which is to be guided with a change in the bending direction to be guided through this central section with a change in the bending direction.

7. Apparatus according to Claim 6, **characterized in that** first guide elements (23), which are in the form of a segment of a circle, are positioned along a relatively small radius and second guide elements, (24), which are in the form of a segment of a circle, are positioned along a relatively large radius, with neither the first guide elements nor the second guide elements being present in the central section in relation to ends of the side walls.

8. Apparatus according to Claim 6 or 7, **characterized in that** third, relatively short, web-like guide elements (25) for optical waveguides are present in the central section in relation to ends of the side walls.

9. Apparatus according to Claim 8, **characterized in that** such optical waveguides of an optical waveguide cable, which are inserted into the housing at a first end of the second side wall (18) and, at the opposite first side wall (14), are fed to plug-type connectors at the same end of the respective side wall, are guided on the second guide elements (24), which are in the form of a segment of a circle, without a change in bending direction, whereas such optical waveguides of the same optical waveguide cable, which are guided to the plug-type connectors at the opposite end of the first side wall, are guided on the second guide elements (24), which are in the form of a segment of a circle, and web-like guide elements (25) with a change in bending direction.
